# EUROPEAN PATENT APPLICATION

(11) **EP 3 588 914 A1**
(43) Date of publication of application: **01.01.2020**
(21) Application number: 18901556.3
(22) Date of filing: 12.02.2018
(51) Int. Cl.: H04L 29/08

(54) **DATA STORAGE METHOD, ENCODING DEVICE AND DECODING DEVICE**

(30) Priority: 19.01.2018 CN 201810054884
(71) Applicant: Wangsu Science & Technology Co., Ltd., Shanghai 200030 (CN)
(72) Inventor: The designation of the inventor has not yet been filed
(74) Representative: Hanna Moore + Curley
(86) International application number: PCT/CN2018/076411
(87) International publication number: WO 2019/140732

(57) **Abstract**

A data storage method includes: acquiring to-be-transmitted data, and dividing the to-be-transmitted data into a plurality of data blocks; determining, from the plurality of data blocks, a set of target data blocks that are not stored in a predefined database; classifying the set of target data blocks as at least one piece of stream data based on stream information, and mounting the at least one piece of stream data to a to-be-confirmed queue; encoding the at least one piece of stream data, and transmitting the encoded at least one piece of stream data to a decoding device; and receiving a confirmation message sent by the decoding device for the encoded at least one piece of stream data, and storing a set of data blocks, in the to-be-confirmed queue, that correspond to the confirmation message, in the predefined database.

## Description

### FIELD OF THE DISCLOSURE

The present disclosure generally relates to the field of Internet technology and, more particularly, relates to a data storage method, an encoding device, and a decoding device thereof.

### BACKGROUND

With the continuous development of the Internet, the amount of data on the Internet has also increased day-by-day. At present, a huge amount of the data transmitted over the Internet is duplicate data. For example, in mass emailing and mass-messaging in instant messaging software, etc., multiple copies are made for the same data and then transmitted. This will inevitably waste precious bandwidth resources.

In order to solve the problem of duplicate data transmission, data deduplication technology can be used nowadays to reduce the amount of data that needs to be transmitted in the network. Specifically, the data deduplication technology may deploy a data-storing database at both the data transmitting terminal and the data receiving terminal. The data in the database may be stored in the form of data fragments, where each data fragment may have a unique pointer. When the data transmitting terminal needs to transmit data to the data receiving terminal, the to-be-transmitted data is first divided into multiple data fragments. If some of the data fragments are already stored in the database, these data fragments will be replaced with pointers. In this way, the to-be-transmitted data can ultimately be processed as a combination of pointers and data fragments, which thus allows the amount of data that needs to be transmitted to be reduced. After receiving the combination of pointers and data fragments, the data receiving terminal may identify the data fragments corresponding to the pointers from the local database, thereby restoring the pointers to the data fragments.

One premise of the above pointer-mediated data fragment restore is that the databases of the data transmitting terminal and the data receiving terminal are kept in synchronization. However, in actual transmission processes, problems such as disconnection of data streaming or restart of the transmission processes may cause the databases of the data transmitting terminal and the data receiving terminal to fail to keep data synchronized. Accordingly, the data receiving terminal may have a great possibility of not being able to identify data fragments corresponding to the pointers from the local database, and thus cannot receive the full data. At this point, the data receiving terminal may require data synchronization with the data transmitting terminal, which will seriously affect the performance of data transmission.

### BRIEF SUMMARY OF THE DISCLOSURE

The purpose of the present disclosure is to provide a data storage method, an encoding device, and a decoding device, that can effectively reduce the generation of data fragments to allow the consumption of memory resources controllable, improve the ability of identification of small stream data, and avoid data synchronization so as to improve the data transmission efficiency.

To achieve the above purpose, in one aspect, the present disclosure provides a data storage method. The method includes: acquiring to-be-transmitted data, and dividing the to-be-transmitted data into a plurality of data blocks; determining, from the plurality of data blocks, a set of target data blocks that are not stored in a predefined database; classifying the set of target data blocks as at least one piece of stream data based on stream information, and mounting the at least one piece of stream data to a to-be-confirmed queue; encoding the at least one piece of stream data, and transmitting the encoded at least one piece of stream data to a decoding device; and receiving a confirmation message sent by the decoding device for the encoded at least one piece of stream data, and storing a set of data blocks, in the to-be-confirmed queue, that correspond to the confirmation message, in the predefined database.

To achieve the above purpose, in another aspect, the present disclosure further provides an encoding device. The encoding device comprises a memory and a processor, where the memory stores computer programs that, when executed by the processor, implement the following steps: acquiring to-be-transmitted data, and dividing the to-be-transmitted data into a plurality of data blocks; determining, from the plurality of data blocks, a set of target data blocks that are not stored in a predefined database; classifying the set of target data blocks as at least one piece of stream data based on stream information, and mounting the at least one piece of stream data to a to-be-confirmed queue; encoding the at least one piece of stream data, and transmitting the encoded at least one piece of stream data to a decoding device; and receiving a confirmation message sent by the decoding device for the encoded at least one piece of stream data, and storing a set of data blocks, in the to-be-confirmed queue, that correspond to the confirmation message, in the predefined database.

To achieve the above purpose, in another aspect, the present disclosure further provides a data storage method. The method includes: receiving encoded data transmitted by an encoding device, and decoding the encoded data into decoded data, where the decoded data includes a plurality of data blocks; classifying the plurality of data blocks as at least one piece of stream data based on stream information, and determining a piece of target stream data whose data volume is greater than or equal to a specified threshold; and storing the piece of target stream data in a predefined database, and sending a confirmation message to the encoding device, where the confirmation message includes a tag for a data block in the piece of target stream data, to allow the encoding device to store the data block in the piece of target stream data.

To achieve the above purpose, in another aspect, the present disclosure further provides a decoding device. The decoding device comprises a memory and a processor, where the memory stores computer programs that, when executed by the processor, implement the following steps: receiving encoded data transmitted by an encoding device, and decoding the encoded data into decoded data, where the decoded data includes a plurality of data blocks; classifying the plurality of data blocks as at least one piece of stream data based on stream information, and determining a piece of target stream data whose data volume is greater than or equal to a specified threshold; and storing the piece of target stream data in a predefined database, and sending a confirmation message to the encoding device, where the confirmation message includes a tag for a data block in the piece of target stream data, to allow the encoding device to store the data block in the piece of target stream data.

As can be seen from the above, in the technical solutions provided by the present disclosure, when the encoding device needs to transmit data to the decoding device, the encoding device may first divide the data into blocks based on the content, and determine target data blocks that are not stored in the predefined database. For a target data block, the encoding device may not directly store it in the predefined database, but rather classify it as stream data based on the stream information, and mount the classified stream data in the to-be-confirmed queue. The stream data may then be encoded and transmitted to the decoding device. After decoding the received data, the decoding device classifies the decoded data blocks as stream data based on the stream information. If the data volume of the stream data is large, the decoding device may store the stream data in the local database, and send a confirmation message to the encoding device. The confirmation message may include the tags of the data blocks in the stored stream data. In this way, after receiving the confirmation message, the encoding device may identify the data blocks in the to-be-confirmed queue that correspond to the confirmation message, so that the data blocks corresponding to the confirmation message may be stored in its own database. As can be seen, serving as a data transmitting terminal, the encoding device may correspondingly execute a data block storing process only after the decoding device (serving as the data receiving terminal) stores the data blocks. In this way, even if a data transmission failure occurs, which leads to the disability of the encoding device to receive the confirmation message, the effect is just that the data in the database of the decoding device is more complete than the data in the database of the encoding device. Accordingly, for a tag, that signifies an already-stored data block, sent by the encoding device, the decoding device apparently is able to identify the corresponding data block from the local database and restore the data block. Therefore, in the technical solutions provided by the present disclosure, even if the data in the database of the encoding device and the database of the decoding device are not synchronized, it does not affect the data receiving process in the decoding device, thereby improving the efficiency of data transmission. In addition, when there is a need to perform a similarity match on target stream data with a relatively small data volume, in order to avoid the problem of insufficiency of the feature index of the target stream data, the virtual stream data where the target stream data is located may be determined. Based on the feature index of the virtual stream data, the similarity match is performed for the target stream data. In this way, when a new stream similarity match is performed on the small stream data, all feature indexes of the stream cluster are used, and thus the problem of insufficiency of the feature index can be solved.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a schematic diagram of a system for applying a data storage method according to some embodiments of the present disclosure;
FIG. 2 is a flowchart of a data storage method in an encoding device according to some embodiments of the present disclosure;
FIG. 3 is a schematic diagram of a data dividing process according to some embodiments of the present disclosure;
FIG. 4 is a schematic diagram of data storage according to some embodiments of the present disclosure;
FIG. 5 is a schematic structural diagram of an encoding device according to some embodiments of the present disclosure;
FIG. 6 is a flowchart of a data storage method in a decoding device according to some embodiments of the present disclosure;
FIG. 7 is a schematic structural diagram of a decoding device according to some embodiments of the present disclosure; and
FIG. 8 is a schematic structural diagram of a computer terminal according to some embodiments of the present disclosure.

### DETAILED DESCRIPTION

To make the objectives, technical solutions, and advantages of the present disclosure clearer, specific embodiments of the present disclosure will be made in detail with reference to the accompanying drawings.

### Embodiment 1

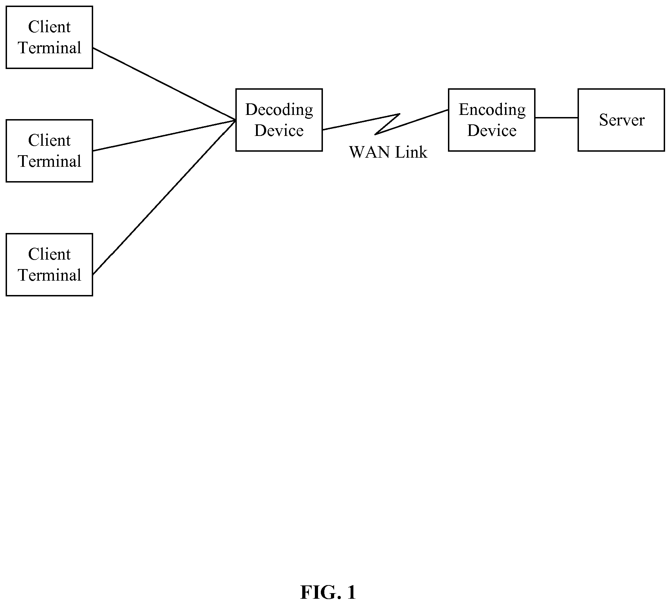

The present disclosure provides a data storage method, which may be applied in a system architecture shown in FIG. 1. In FIG. 1, the server may serve as a data source, and the client terminal may serve as a party to request loading data from the server. Here, after receiving the data loading request sent by the client terminal, the server may transmit data corresponding to the data loading request, through an encoding device, to a decoding device on the client terminal side. The technical solutions provided by the present disclosure may be applied to the aforementioned encoding device and decoding device.

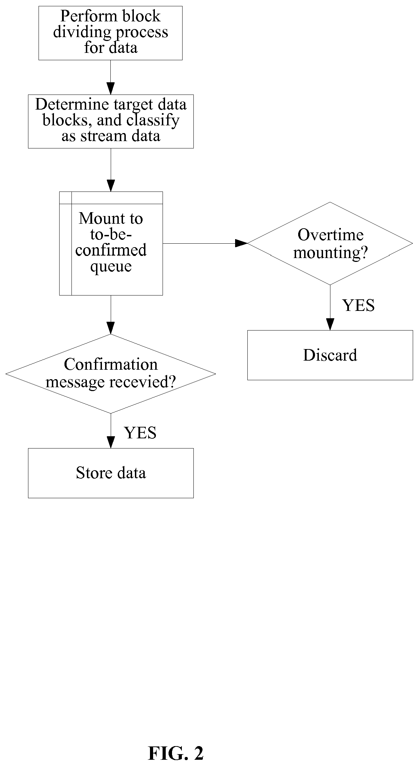

In the data storage method provided in the disclosed embodiment, the execution entity may be an encoding device. Referring to FIG. 2, the method may include the following steps.

S11: acquiring to-be-transmitted data, and dividing the to-be-transmitted data into a plurality of data blocks.

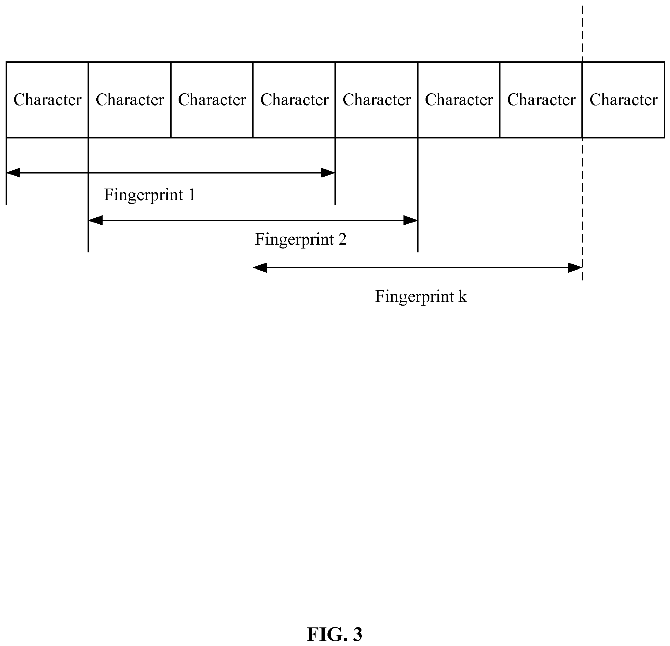

In the disclosed embodiment, the encoding device may acquire the to-be-transmitted data from the server, and divide the to-be-transmitted data into blocks based on the content. In actual applications, the data may be divided into blocks using a Rabin fingerprint algorithm. Specifically, referring to FIG. 3, the data may comprise a plurality of characters, which may be 8-bit binary numbers. When dividing the data into blocks, a data sliding window may be employed to slide from the beginning to the end of the data according to a fixed step length, and the Rabin fingerprint of the data blocks in each data sliding window is calculated one by one. If the calculated fingerprint value is the same as a predefined fingerprint value, the ending position of the present data sliding window may be used as a data block dividing position. For example, in FIG. 3, the data sliding window may slide to the right one character at a time, where the fingerprint k for the data blocks in the k window is the same as the predefined fingerprint value. The ending position (the dashed line position in the figure) of the k window may thus be set as a dividing position for dividing data blocks. Eventually, when the data sliding window moves to the end of the data, the block dividing process may be completed. In this way, through the block dividing process, the data may be divided into a plurality of data blocks.

In the disclosed embodiment, after the data is divided into a plurality of data blocks, the encoding device may also calculate a hash value for each data block, and the calculated hash value may uniquely signify the corresponding data block.

S12: determining, from the plurality of data blocks, a set of target data blocks that are not stored in a predefined database.

In the disclosed embodiment, the encoding device may store to-be-transmitted data in a predefined database, so that when sending out data later, the encoding device may determine whether the to-be-transmitted data is the duplicate data that has already been stored in the predefined database. In this way, after performing the block dividing process on the to-be-transmitted data to get a plurality of data blocks, the encoding device may compare the plurality of data blocks with the data blocks in the predefined database, to determine, among the plurality of data blocks, target data blocks that are not stored in the predefined database and the already-stored data blocks that have already been stored in the predefined database. Specifically, a data block in the predefined database may have its own hash value, while each data block in the plurality of data blocks may also have its own hash value. By comparing the hash values of the two sides, the target data blocks and the already-stored data blocks in the plurality of data blocks may thus be determined.

In the disclosed embodiment, a data block stored in the predefined database may be associated with a data block tag, and the data block tag may uniquely signify the associated data block. Compared to the data volume of a data block, the data volume of a data block tag will be much smaller. In actual applications, the data block tag may be a hash value of the data block or a unique character string assigned to the data block by the encoding device. The modes for expressing a data block tag are not limited in the present disclosure, and other expression modes are also applicable as long as they are able to uniquely signify a data block.

In the disclosed embodiment, after determining the un-stored target data blocks and the already-stored data blocks in the plurality of data blocks, a data block tag associated with an already-stored data block may be used to replace the already-stored data block in the plurality of data blocks, and thus the plurality of data blocks may be converted into a combination of the target data blocks and data block tags. This may reduce the amount of data that needs to be transmitted.

S13: classifying the set of target data blocks as at least one piece of stream data based on stream information, and mounting the at least one piece of stream data to a to-be-confirmed queue.

In the disclosed embodiment, for the target data blocks that are not stored in the predefined database, the encoding device may classify the target data blocks as at least one piece of stream data based on the stream information. Here, the stream information may be five-tuple information included in a target data block. The five-tuple information may include the source IP address for transmitting the data block, the destination IP address for receiving the data block, the source port for transmitting the data block, the destination port for receiving the data block, and the transmission protocol used for the data block. In this way, the encoding device may classify data blocks that have the same five-tuple information into one piece of stream data.

In the disclosed embodiment, after classifying the target data blocks as the stream data, the encoding device may not directly store the stream data in the predefined database, but rather mount the stream data to a to-be-confirmed queue. After receiving the confirmation message sent by the decoding device, the encoding device may store the corresponding stream data in the to-be-confirmed queue in the predefined database.

In one embodiment, the total mounting period of each stream data may be determined. When the total mounting period reaches a predefined time-length threshold, the stream data is considered to have an overtime mounting. In order to avoid excessive stream data mounted in the to-be-confirmed queue, if the stream data in the to-be-confirmed queue has an overtime mounting, the stream data with the overtime mounting may be directly discarded, to save space of the to-be-confirmed queue.

S14: encoding the at least one piece of stream data, and transmitting the encoded at least one piece of stream data to a decoding device.

In the disclosed embodiment, after classifying the target data blocks as the stream data, the encoding device may encode the stream data according to a specified encoding algorithm. In actual applications, the to-be-transmitted data may include data block tags that replace the already-stored data blocks and stream data that are classified from the un-stored target data blocks. In this case, during encoding, the data block tags that replace the already-stored data blocks may be encoded at the same time. After encoding the data block tags and the stream data separately, the encoding device may transmit the encoded stream data and the encoded data block tags to the links of the wide area network, to allow the transmission of the encoded stream data and the encoded data block tags to the decoding device on the client terminal side.

In the disclosed embodiment, after receiving the encoded data transmitted by the encoding device, the decoding device may decode the encoded data into decoded data. The decoded data may include a plurality of data blocks and tags that are used to signify the data blocks that have already been stored in the encoding device. Since the decoding device may alternatively receive different data blocks from multiple pieces of stream data when receiving the encoded data, the plurality of data blocks in the decoded data decoded by the decoding device may be not arranged according to the stream data. In this case, the decoding device may classify the plurality of data blocks as at least one piece of stream data based on stream information. Here, the stream information may be the above-described five-tuple information. The encoding device may classify the data blocks that have the same five-tuple information into the same piece of stream data.

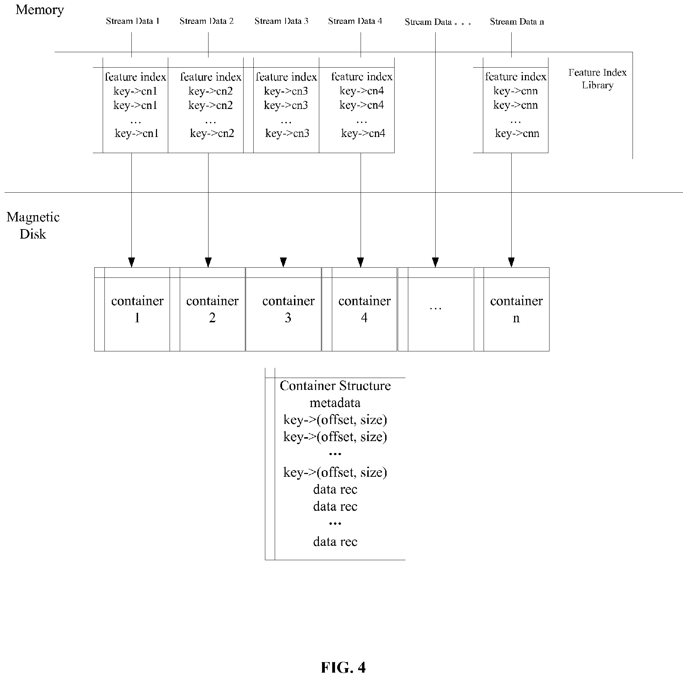

In the disclosed embodiment, if storing stream data with a relatively small data volume in a predefined database of the decoding device, it may lead to a large number of data fragments in the predefined database of the decoding device, which takes the decoding device quite a good amount of time in the subsequent data indexing. To prevent this to happen, the decoding device may determine target stream data that has a data volume greater than or equal to a specified threshold. The specified threshold may be a predefined constant. The specified threshold may be used to determine whether the data volume of the stream data is too small. When the data volume of the stream data is greater than or equal to the specified threshold, the stream data is considered to meet the criteria of being storable. At this point, the decoding device may store the target stream data that has a data volume greater than or equal to the specified threshold in its own predefined database. Referring to FIG. 4, the predefined database of the decoding device may be a magnetic disk of the decoding device. In the magnetic disk, the target stream data may be stored as a storage unit. As shown in FIG. 4, the storage unit may be defined as a container. The storage unit may contain data blocks included in the target stream data and index information of the target stream data. The index information may be used to signify the starting offset of each data block in the storage unit and the data size of each data block. After the target stream data is stored in the magnetic disk according to the storage unit, the feature index of the target stream data may also be extracted. The extracted feature index may be written into the memory and be periodically and persistently stored on the magnetic disk. If it is necessary to match similar or identical stream data from the predefined database later, a preliminary assessment may be made based on the feature index. Specifically, the feature index may be extracted based on the intrinsic features of the target stream data. The intrinsic features may include, for example, blocking window sizes, out-of-order fragments, and the like. When extracting the feature index, certain features may be specified in advance from the intrinsic features. Which feature that each data block of the target stream data corresponds to may be identified. The identified features may be sequenced based on the order of the data blocks in the target stream data, to obtain the feature index of the target stream data. As one example, feature 1 to feature 3 are specified at this time. The target stream data include five data blocks. The five data blocks respectively correspond to feature 2, feature 1, feature 3, feature 1, and feature 2. The sequence of feature 2, feature 1, feature 3, feature 1, and feature 2 may then be considered as the feature index of the target stream data. In FIG. 4, each feature index may include a key and a value corresponding to the key (cn1, cn2, cnn, etc.). The structure of the storage unit may include metadata, offset and data size corresponding to the key, and specific stored data (data rec).

In the disclosed embodiment, regarding the tag for a data block included in the decoded data, the decoding device may query, in its own predefined database, whether there exists a data block corresponding to the tag. If there exists a data block corresponding to the tag, the tag may be restored to the corresponding data block. If there does not exist a data block corresponding to the tag, it indicates that certain data blocks are missing in the current database of the decoding device. At this moment, the decoding device may send a synchronization request to the encoding device, to synchronize with the data blocks stored in the encoding device.

In the disclosed embodiment, after storing the target stream data in its own database and extracting the feature index into the memory, the decoding device may send a confirmation message to the encoding device. The confirmation message may include tags for the data blocks included in the target stream data, which allows the encoding device to store the data blocks in the target stream data. Here, the tags for the data blocks in the target stream data may be the calculated hash values of the data blocks.

S15: receiving a confirmation message sent by the decoding device for the encoded at least one piece of stream data, and storing a set of data blocks, in the to-be-confirmed queue, that correspond to the confirmation message, in the predefined database.

In the disclosed embodiment, after receiving the confirmation message sent by the decoding device, the encoding device may determine data blocks, in the to-be-confirmed queue, that correspond to the confirmation message, and store the data blocks that correspond to the confirmation message in the predefined database. Specifically, the confirmation message may include the tags for the data blocks. The tags may be, for example, the hash values of the data blocks. The encoding device may identify the corresponding data blocks in the to-be-confirmed queue through the tags of the data blocks, and store the identified data blocks.

In actual applications, the encoding device's own database may also be a magnetic disk as shown in FIG. 4. The encoding device may also store the data blocks on the magnetic disk based on the stream data. The stream data where the data blocks corresponding to the confirmation message are located may be stored as a storage unit on the magnetic disk of the encoding device. The storage unit may be defined as a container. The storage unit may include data blocks included in the stream data and index information of the stream data. The index information may be used to signify the starting offset of each data block in the storage unit and the data size of each data block. After the stream data is stored in the magnetic disk according to the storage unit, the encoding device may also extract the feature index of the stream data, write the feature index into the memory, and periodically and persistently store the feature index on the magnetic disk.

In one embodiment of the present disclosure, after the decoding device obtains the decoded data and classifies the data blocks contained therein as stream data, if the data volume of the stream data is less than the above-noted specified threshold, the decoding device may mount the stream data that has a data volume less than the specified threshold into a to-be-aggregated queue. For the stream data in the to-be-aggregated queue, the decoding device will aggregate multiple pieces of stream data only after it is confirmed that there is a correlation among the multiple pieces of stream data. Specifically, in the disclosed embodiment, an application proxy module or other correlation analysis modules may be used to determine multiple pieces of stream data that have a correlation. The application proxy module may be, for example, an HTTP (HyperText Transfer Protocol), a MAPI (Messaging Disclosure Programming Interface), or a CIFS (Common Internet File System), etc. These application proxy modules may determine that multiple different pieces of stream data are located in the same session, and thus determine an existence of the correlated stream data. After receiving the correlation information sent by an application proxy module, the decoding device may aggregate multiple pieces of stream data, in the to-be-aggregated queue, that correspond to the correlation information, into a piece of virtual stream data. The correlation information may include five-tuple information of the multiple pieces of correlated stream data. Based on the respective five-tuple information included in the correlation information, the decoding device may determine a set of corresponding stream data in the to-be-aggregated queue. Although the set of stream data are correlated, due to the difference in five-tuple information, the set of stream data may only be aggregated into a piece of virtual stream data in the form of stream data. In the virtual stream data, multiple sets of five-tuple information are still included. After obtaining the virtual stream data from the aggregation, the decoding device may store the virtual stream data in its own predefined database, extract the feature index of the virtual stream data, write the feature index into the memory, and periodically and persistently store the feature index on the magnetic disk.

In the disclosed embodiment, after aggregating multiple pieces of stream data into one piece of virtual stream data and storing the virtual stream data, the decoding device may add an aggregation instruction to a confirmation message to be sent to the encoding device. The aggregation instruction may include five-tuple information of the multiple pieces of stream data that need to be aggregated, or may include the tag of each data block in the multiple pieces of stream data that need to be aggregated. In this way, the aggregation instruction may include the tag of each stream data in the already-stored virtual stream data. After extracting the aggregation instruction from the confirmation message, the encoding device may identify a set of target stream data in the to-be-confirmed queue, aggregate the set of target stream data into a piece of virtual stream data, and extract the feature index of the virtual stream data into the memory.

In the disclosed embodiment, when a similarity match needs to be performed on the target stream data that has a relatively small data volume, in order to avoid the problem of insufficiency of the feature index of the target stream data, the virtual stream data where the target stream data is located may be determined. Based on the feature index of the virtual stream data, similarity match may be performed on the target stream data. In this way, when a stream similarity match is performed on a piece of new small stream data, all feature indexes of a plurality of pieces of small stream data in the stream cluster associated with the piece of new small stream data are used, and thus the problem of insufficiency of the feature index of the piece of new small stream data can be solved.

### Embodiment 2

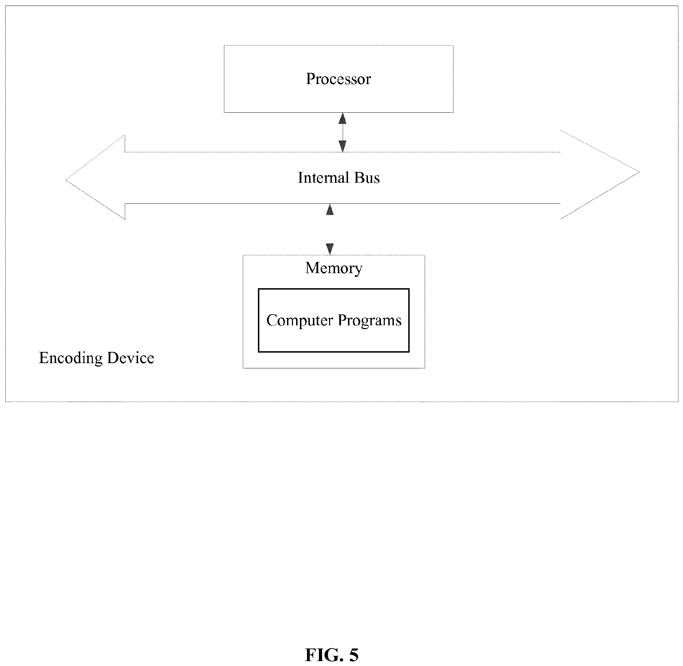

Referring to FIG. 5, the present disclosure further provides an encoding device. The encoding device comprises a memory and a processor, where the memory stores computer programs that, when executed by the processor, implement the following steps:
S11: acquiring to-be-transmitted data, and dividing the to-be-transmitted data into a plurality of data blocks;
S12: determining, from the plurality of data blocks, a set of target data blocks that are not stored in a predefined database;
S13: classifying the set of target data blocks as at least one piece of stream data based on stream information, and mounting the at least one piece of stream data to a to-be-confirmed queue;
S14: encoding the at least one piece of stream data, and transmitting the encoded at least one piece of stream data to a decoding device; and
S15: receiving a confirmation message sent by the decoding device for the encoded at least one piece of stream data, and storing a set of data blocks, in the to-be-confirmed queue, that correspond to the confirmation message, in the predefined database.

In the disclosed embodiment, the computer programs, when executed by the processor, further implement the following step:
extracting a feature index of a piece of stream data where a data block corresponding to the confirmation message is located, writing the feature index into the memory, and periodically and persistently storing the feature index on a magnetic disk.

In the disclosed embodiment, the confirmation message further includes an aggregation instruction, and the aggregation instruction includes tags for a set of target stream data in the to-be-confirmed queue, and correspondingly, the computer programs, when executed by the processor, further implement the following steps:
aggregating the set of target stream data into a piece of virtual stream data; and
storing the piece of virtual stream data in the predefined database, extracting a feature index of the piece of virtual stream data into the memory, and periodically and persistently storing the feature index on a magnetic disk.

### Embodiment 3

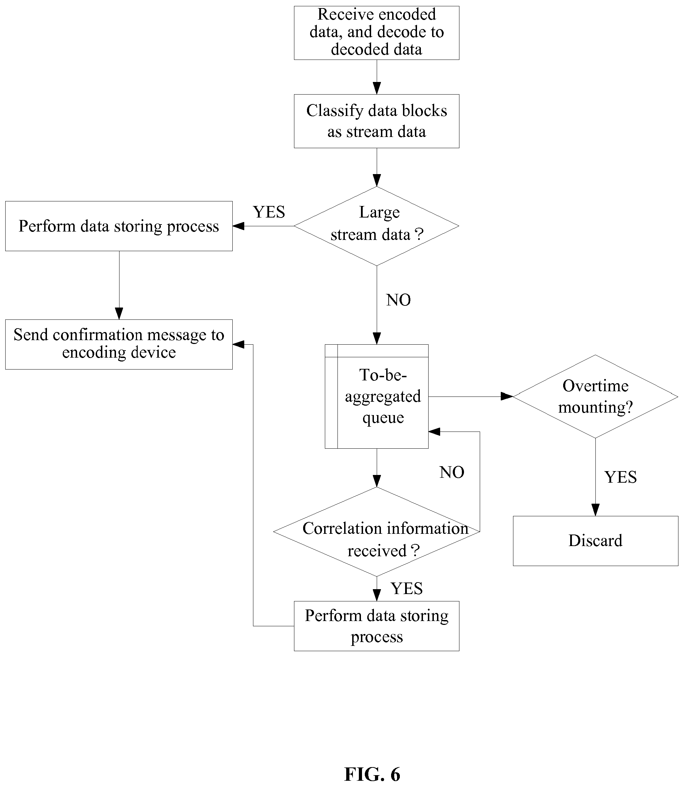

Referring to FIG. 6, the present disclosure further provides a data storage method. The execution entity of the method may be a decoding device. The method may include the following steps.
S21: receiving encoded data transmitted by an encoding device, and decoding the encoded data into decoded data, where the decoded data includes a plurality of data blocks.
S22: classifying the plurality of data blocks as at least one piece of stream data based on stream information, and determining a piece of target stream data whose data volume is greater than or equal to a specified threshold.
S23: storing the piece of target stream data in a predefined database, and sending a confirmation message to the encoding device, where the confirmation message includes a tag for a data block in the piece of target stream data, to allow the encoding device to store the data block in the piece of target stream data.

In the disclosed embodiment, after receiving the encoded data transmitted by the encoding device, the decoding device may decode the encoded data into decoded data. The decoded data may include a plurality of data blocks and tags that are used to signify the data blocks that have already been stored in the encoding device. Since the decoding device may alternatively receive different data blocks from multiple pieces of stream data when receiving the encoded data, the plurality of data blocks in the decoded data decoded by the decoding device may be not arranged according to the stream data. In this case, the decoding device may classify the plurality of data blocks as at least one piece of stream data based on stream information. Here, the stream information may be the above-described five-tuple information. The encoding device may classify the data blocks that have the same five-tuple information into the same piece of stream data.

In the disclosed embodiment, if storing stream data with a relatively small data volume in a predefined database of the decoding device, it may lead to a large number of data fragments in the predefined database of the decoding device, which takes the decoding device quite a good amount of time in the subsequent data indexing. To prevent this to happen, the decoding device may determine target stream data that has a data volume greater than or equal to a specified threshold. The specified threshold may be a predefined constant. The specified threshold may be used to determine whether the data volume of the stream data is too small. When the data volume of the stream data is greater than or equal to the specified threshold, the stream data is considered to meet the criteria of being storable. At this moment, the decoding device may store the target stream data that has a data volume greater than or equal to the specified threshold in its own predefined database. Referring to FIG. 4, the predefined database of the decoding device may be a magnetic disk of the decoding device. In the magnetic disk, the target stream data may be stored as a storage unit. As shown in FIG. 4, the storage unit may be defined as a container. The storage unit may contain data blocks included in the target stream data and index information of the target stream data. The index information may be used to signify the starting offset of each data block in the storage unit and the data size of each data block. After the target stream data is stored in the magnetic disk according to the storage unit, the feature index of the target stream data may also be extracted. The extracted feature index may be written into the memory and periodically and persistently stored on the magnetic disk. If it is necessary to match similar or identical stream data from the predefined database later, a preliminary assessment may be made based on the feature index. Specifically, the feature index may be extracted based on the intrinsic features of the target stream data. The intrinsic features may include, for example, blocking window sizes, out-of-order fragments, and the like. When extracting the feature index, certain features may be specified in advance from the intrinsic features. Which feature that each data block of the target stream data corresponds to may be identified. The identified features may be sequenced based on the order of the data blocks in the target stream data, to obtain the feature index of the target stream data. As one example, feature 1 to feature 3 are specified at present. The target stream data include five data blocks. The five data blocks respectively correspond to feature 2, feature 1, feature 3, feature 1, and feature 2. The sequence of feature 2, feature 1, feature 3, feature 1, and feature 2 may then be considered as the feature index of the target stream data.

In the disclosed embodiment, regarding the tag for a data block included in the decoded data, the decoding device may query, in its own predefined database, whether there exists a data block corresponding to the tag. If there exists a data block corresponding to the tag, the tag may be restored to the corresponding data block. If there does not exist a data block corresponding to the tag, it indicates that certain data blocks are missing in the current database of the decoding device. At this moment, the decoding device may send a synchronization request to the encoding device, to synchronize with the data blocks stored in the encoding device.

In the disclosed embodiment, after storing the target stream data in its own database and extracting the feature index into the memory, the decoding device may send a confirmation message to the encoding device. The confirmation message may include tags for the data blocks included in the target stream data, which allows the encoding device to store the data blocks in the target stream data. Here, the tags for the data blocks in the target stream data may be the calculated hash values of the data blocks.

In one embodiment of the present disclosure, after the decoding device obtains the decoded data and classifies the data blocks contained therein as stream data, if the data volume of the stream data is less than the above-noted specified threshold, the decoding device may mount the stream data that has a data volume less than the specified threshold into a to-be-aggregated queue. For the stream data in the to-be-aggregated queue, the decoding device will aggregate multiple pieces of stream data only after it is confirmed that there is a correlation among the multiple pieces of stream data. Specifically, in the disclosed embodiment, an application proxy module or other correlation analysis modules may be used to determine the stream data that have a correlation. The application proxy module may be, for example, an HTTP (HyperText Transfer Protocol), a MAPI (Messaging Disclosure Programming Interface), or a CIFS (Common Internet File System), etc. These application proxy modules may determine that multiple different pieces of stream data are located in the same session, and thus determine an existence of the correlated stream data. After receiving the correlation information sent by an application proxy module, the decoding device may aggregate multiple pieces of stream data, in the to-be-aggregated queue, that correspond to the correlation information, into a piece of virtual stream data. The correlation information may include five-tuple information of the multiple pieces of correlated stream data. Based on the respective five-tuple information included in the correlation information, the decoding device may determine a set of corresponding stream data in the to-be-aggregated queue. Although the set of stream data are correlated, due to the difference of their five-tuple information, the set of stream data may only be aggregated into a piece of virtual stream data in the form of stream data. In the virtual stream data, multiple sets of five-tuple information are still included. After obtaining the virtual stream data from the aggregation, the decoding device may store the virtual stream data in its own predefined database, extract the feature index of the virtual stream data, write the feature index into the memory, and periodically and persistently store the feature index on the magnetic disk.

In the disclosed embodiment, after aggregating multiple pieces of stream data into one piece of virtual stream data and storing the virtual stream data, the decoding device may add an aggregation instruction to a confirmation message to be sent to the encoding device. The aggregation instruction may include five-tuple information of the multiple pieces of stream data that need to be aggregated, or may include the tag of each data block in the multiple pieces of stream data that need to be aggregated. In this way, the aggregation instruction may include the tag of each stream data in the already-stored virtual stream data. After extracting the aggregation instruction from the confirmation message, the encoding device may identify a set of target stream data in the to-be-confirmed queue, aggregate the set of target stream data into a piece of virtual stream data, and extract the feature index of the virtual stream data into the memory.

In one embodiment, the decoding device may determine the total mounting period of the stream data in the to-be-aggregated queue. When the total mounting period exceeds a specified time-length threshold, the stream data may be considered to have an overtime mounting. To save the space of the to-be-aggregated queue, if the stream data, whose data volume is less than the specified threshold, has an overtime mounting in the to-be-aggregated queue, the decoding device may discard the stream data with the overtime mounting.

In one embodiment of the present disclosure, after the decoding device classifies the data blocks in the decoded data as stream data, the classified stream data may very likely be similar to some stream data stored in the database. For example, the decoding device has previously received the data for the first draft of a document, and has again received the data for the revised draft of the document. The revised draft may have only a little content different from the first draft. The data for the first draft and the data for the revised draft may thus be considered as two pieces of similar stream data. At this point, if the classified stream data is stored in the database, there will be two pieces of similar stream data in the database. This will waste the storage space of the database. Under this situation, the decoding device may check, in its own predefined database, similar stream data whose similarity to the classified data stream reaches a specified similarity threshold. Specifically, when comparing the similarity of the two pieces of stream data, the similarity may be determined by comparing the similarity of the feature indexes of the two pieces of stream data. For example, the number of correspondingly matched features in the feature indexes of the two pieces of stream data may be determined, and the ratio of the number of correspondingly matched features in the total number of features of the feature indexes is calculated. The calculated ratio may be considered as the similarity between the two pieces of stream data. The higher the ratio, the higher the similarity. The specified similarity threshold may be a predefined constant, which can be flexibly adjusted based on the real conditions. After determining the similar stream data, the classified stream data and the determined similar stream data may be compared, to determine the additional new data in the classified stream data. Specifically, the similar stream data may be read into the memory from the predefined database, and different data between the similar stream data and the classified stream data may be identified by comparison. The identified different data may be considered as additional new data. In the disclosed embodiment, if the data volume of the additional new data is large, the additional new data may be stored as a piece of new stream data according to the above-described approach. If the data volume of the additional new data is smaller than the specified data volume threshold, the additional new data may be added to the similar stream data. In this way, the problem that the stream data with a small data volume cannot be efficiently identified through the feature index can then be avoided.

### Embodiment 4

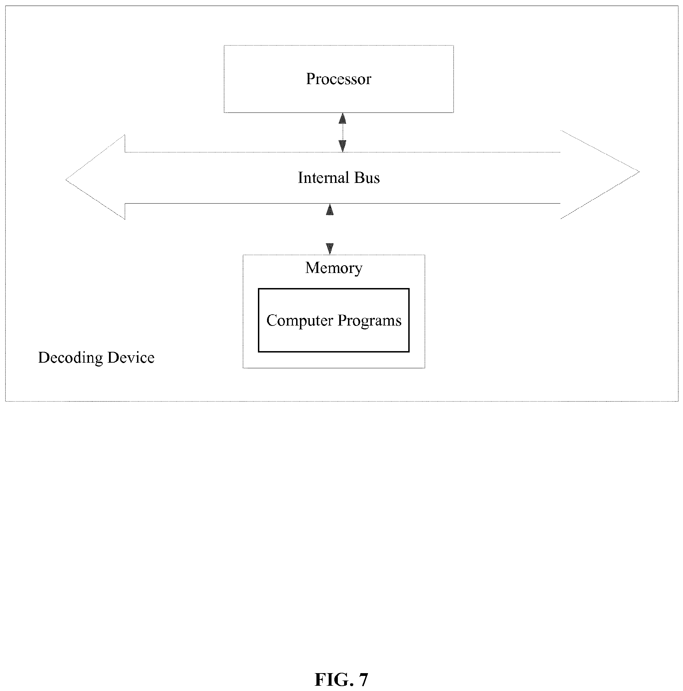

Referring to FIG. 7, the present disclosure further provides a decoding device. The decoding device comprises a memory and a processor, where the memory stores computer programs that, when executed by the processor, implement the following steps:
S21: receiving encoded data transmitted by an encoding device, and decoding the encoded data into decoded data, where the decoded data includes a plurality of data blocks;
S22: classifying the plurality of data blocks as at least one piece of stream data based on stream information, and determining a piece of target stream data whose data volume is greater than or equal to a specified threshold; and
S23: storing the piece of target stream data in a predefined database, and sending a confirmation message to the encoding device, where the confirmation message includes a tag for a data block in the piece of target stream data, to allow the encoding device to store the data block in the piece of target stream data.

In the disclosed embodiment, the computer programs, when executed by the processor, further implement the following steps:
when there exists a piece of stream data, in the classified at least one piece of stream data, whose data volume is less than the specified threshold, mounting the piece of stream data whose data volume is less than the specified threshold to a to-be-aggregated queue;
receiving correlation information sent by an application proxy module, where the correlation information is used to signify multiple pieces of stream data with a correlation;
aggregating multiple pieces of stream data, corresponding to the correlation information, in the to-be-aggregated queue, to a piece of virtual stream data, and storing the piece of virtual stream data in the predefined database;
extracting a feature index of the piece of virtual stream data, writing the feature index into the memory, and periodically and persistently storing the feature index in a magnetic disk; and
adding an aggregation instruction to the confirmation message, where the aggregation instruction includes a tag for each piece of stream data in the piece of virtual stream data, to allow the encoding device to aggregate each piece of stream data in the piece of virtual stream data and store the aggregated virtual stream data.

In the disclosed embodiment, the computer programs, when executed by the processor, further implement the following steps:
querying, in the predefined database, a piece of similar stream data whose similarity to a piece of classified stream data reaches a specified similarity threshold;
comparing the piece of classified stream data and the piece of similar stream data, to identify additional new data in the piece of classified stream data; and
when a data volume of the additional new data is less than a specified data volume threshold, adding the additional new data to the piece of similar stream data.

As can be seen from the above, in the technical solutions provided by the present disclosure, when the encoding device needs to transmit data to the decoding device, the encoding device may first divide the data into blocks based on the content, and determine target data blocks that are not stored in the predefined database. For a target data block, the encoding device may not directly store it in the predefined database, but rather classify it as stream data based on the stream information, and mount the stream data in the to-be-confirmed queue. The stream data may then be encoded and transmitted to the decoding device. After decoding the received data, the decoding device classifies the decoded data blocks as stream data based on the stream information. If the data volume of the stream data is large, the decoding device may store the stream data in the local database, and send a confirmation message to the encoding device. The confirmation message may include the tags of the data blocks in the stored stream data. In this way, after receiving the confirmation message, the encoding device may identify the data blocks in the to-be-confirmed queue that correspond to the confirmation message, so that the data blocks corresponding to the confirmation message may be stored in its own database. As can be seen, serving as a data transmitting terminal, the encoding device may correspondingly execute data block storing process only after the decoding device (serving as the data receiving terminal) stores the data blocks. In this way, even if a data transmission failure occurs, which leads to the disability of the encoding device to receive the confirmation message, the effect is just that the data in the database of the decoding device is more complete than the data in the database of the encoding device. Accordingly, for a tag, that signifies an already-stored data block, sent by the encoding device, the decoding device apparently is able to identify the corresponding data block from the local database and restore the data block. Therefore, in the technical solutions provided by the present disclosure, even if the data in the database of the encoding device and the database of the decoding device are not synchronized, it does not affect the data receiving process in the decoding device, thereby improving the efficiency of data transmission. In addition, when there is a need to perform a similarity match on target stream data with a relatively small data volume, in order to avoid the problem of insufficiency of the feature index of the target stream data, the virtual stream data where the target stream data is located may be determined. Based on the feature index of the virtual stream data, the similarity match is performed for the target stream data. In this way, when a stream similarity match is performed on a piece of new small stream data, all feature indexes of a plurality of pieces of small stream data in the stream cluster associated with the piece of new small stream data are used, and thus the problem of insufficiency of the feature index of the piece of new small stream data can be solved.

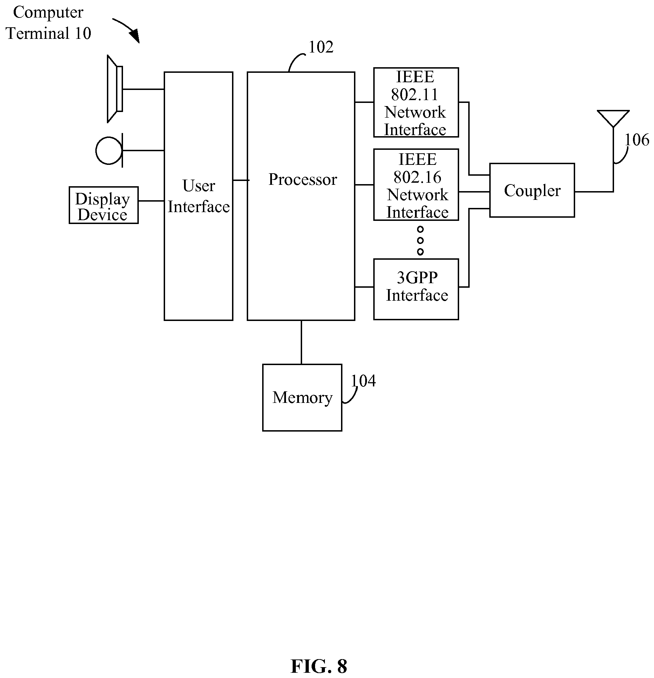

Referring to FIG. 8, in the present disclosure, the technical solutions in the foregoing embodiments may be applied to a computer terminal 10 shown in FIG. 8. The computer terminal 10 may include one or more (only one is shown in the figure) processors 102 (a processor 102 may include, but is not limited to, a processing device such as a microprocessor MCU or a programmable logic device FPGA), a memory 104 for storing data, and a transmission device 106 for communication purpose. Persons of ordinary skill in the art may understand that the structure shown in FIG. 8 is provided by way of illustration, but not by way of limitation of the structures of the above-described electronic devices. For example, the computer terminal 10 may also include more or fewer components than those shown in FIG. 8, or have a different configuration than that shown in FIG. 8.

The memory 104 may be used to store software programs and modules of application software. The processor 102 implements various functional applications and data processing by executing software programs and modules stored in the memory 104. The memory 104 may include a high-speed random access memory, and also a non-volatile memory, such as one or more magnetic storage devices, flash memory, or other non-volatile solid-state memory. In some applications, the memory 104 may further include a memory remotely disposed with respect to the processor 102, which may be connected to the computer terminal 10 through a network. Examples of such network include, but are not limited to, the Internet, an intranet, a local area network, a mobile communication network, and combinations thereof.

The transmission device 106 is configured to receive or transmit data via the network. The aforementioned specific examples of the network may include a wireless network provided by the communication provider of the computer terminal 10. In one application, the transmission device 106 includes a network interface controller (NIC) that may be connected to other network devices through the base stations to allow it to communicate with the Internet. In one application, the transmission device 106 may be a Radio Frequency (RF) module that is configured to communicate with the Internet via a wireless approach.

Through the foregoing description of the embodiments, it is clear to those skilled in the art that the various embodiments may take the form of a software plus a necessary general hardware platform implementation, and entirely a hardware implementation. In light of this understanding, the technical solutions, or essentially the parts that contribute to the current technology, may be embodied by way of a software product. The computer software product may be stored in a computer-readable storage medium, such as a ROM/RAM, a magnetic disc, an optical disc, etc., and include a variety of programs that cause a computing device (which may be a personal computer, a server, or a network device, etc.) to implement each embodiment or methods described in certain parts of each embodiment.

Although the present disclosure has been described as above with reference to preferred embodiments, these embodiments are not constructed as limiting the present disclosure. Any modifications, equivalent replacements, and improvements made without departing from the spirit and principle of the present disclosure shall fall within the scope of the protection of the present disclosure.

## Claims

1. A data storage method, comprising:
acquiring to-be-transmitted data, and dividing the to-be-transmitted data into a plurality of data blocks;
determining, from the plurality of data blocks, a set of target data blocks that are not stored in a predefined database;
classifying the set of target data blocks as at least one piece of stream data based on stream information, and mounting the at least one piece of stream data to a to-be-confirmed queue;
encoding the at least one piece of stream data, and transmitting the encoded at least one piece of stream data to a decoding device; and
receiving a confirmation message sent by the decoding device for the encoded at least one piece of stream data, and storing a set of data blocks, in the to-be-confirmed queue, that correspond to the confirmation message, in the predefined database.

2. The method according to claim 1, wherein a data block stored in the predefined database is associated with a data block tag, and after dividing the to-be-transmitted data into the plurality of data blocks, the method further includes:
determining, from the plurality of data blocks, an already-stored data block that has already been stored in the predefined database; and
replacing an already-stored data block in the plurality of data blocks with a data block tag associated with the already-stored data block in the plurality of data blocks.

3. The method according to claim 2, when encoding the at least one piece of stream data,
the method further includes:
encoding the data block tag that replaces the already-stored data block, and transmitting the encoded data block tag to the decoding device, to allow the decoding device to identify a corresponding data block based on the encoded data block tag.

4. The method according to claim 1, after storing the set of data blocks in the to-be-confirmed queue that correspond to the confirmation message in the predefined database, the method further includes:
extracting a feature index of a piece of stream data where a data block corresponding to the confirmation message is located, writing the feature index into a memory, and backing up and storing the backup on a hard drive.

5. The method according to claim 1, further comprising:
if a piece of stream data has an overtime mounting in the to-be-confirmed queue, discarding the piece of stream data with the overtime mounting.

6. The method according to claim 1, wherein the confirmation message further includes an aggregation instruction, and the aggregation instruction includes tags for a set of target stream data in the to-be-confirmed queue, and the method further includes:
aggregating the set of target stream data into a piece of virtual stream data; and
storing the piece of virtual stream data in the predefined database, extracting a feature index of the piece of virtual stream data into a memory, and persistently storing the feature index on a hard drive.

7. The method according to claim 6, further comprising:
when performing a similarity match for a piece of target stream data, determining a piece of virtual stream data where the piece of target stream data is located, and performing the similarity match for the piece of target stream data based on a feature index of the piece of virtual stream data where the piece of target stream data is located.

8. An encoding device, comprising a memory and a processor, wherein the memory stores computer programs that, when executed by the processor, implement the following steps:
acquiring to-be-transmitted data, and dividing the to-be-transmitted data into a plurality of data blocks;
determining, from the plurality of data blocks, a set of target data blocks that are not stored in a predefined database;
classifying the set of target data blocks as at least one piece of stream data based on stream information, and mounting the at least one piece of stream data to a to-be-confirmed queue;
encoding the at least one piece of stream data, and transmitting the encoded at least one piece of stream data to a decoding device; and
receiving a confirmation message sent by the decoding device for the encoded at least one piece of stream data, and storing a set of data blocks, in the to-be-confirmed queue, that correspond to the confirmation message, in the predefined database.

9. The encoding device according to claim 8, wherein the computer programs, when
executed by the processor, further implement the following step:
extracting a feature index of a piece of stream data where a data block corresponding to the confirmation message is located, writing the feature index into the memory, and persistently storing the feature index on a hard drive.

10. The encoding device according to claim 8, wherein the confirmation message further includes an aggregation instruction, and the aggregation instruction includes tags for a set of target stream data in the to-be-confirmed queue, and the computer programs, when executed by the processor, further implement the following steps:
aggregating the set of target stream data into a piece of virtual stream data; and
storing the piece of virtual stream data in the predefined database, extracting a feature index of the piece of virtual stream data into the memory, and persistently storing the feature index on a hard drive.

11. A data storage method, comprising:
receiving encoded data transmitted by an encoding device, and decoding the encoded data into decoded data, wherein the decoded data includes a plurality of data blocks;
classifying the plurality of data blocks as at least one piece of stream data based on stream information, and determining a piece of target stream data whose data volume is greater than or equal to a specified threshold; and
storing the piece of target stream data in a predefined database, and sending a confirmation message to the encoding device, wherein the confirmation message includes a tag for a data block in the piece of target stream data, to allow the encoding device to store the data block in the piece of target stream data.

12. The method according to claim 11, wherein the decoded data further include a tag that is used to signify a data block already stored in the encoding device, and, after decoding the encoded data into the decoded data, the method further includes:
checking, in the predefined database, whether there exists a data block corresponding to the tag included in the decoded data;
if there exists the data block corresponding to the tag included in the decoded data, restoring the tag included in the encoded data to the corresponding data block; and
if there does not exist the data block corresponding to the tag included in the decoded data, transmitting a synchronization request to the encoding device, to synchronize with data blocks stored in the encoding device.

13. The method according to claim 11, when there exists a piece of stream data, in the classified at least one piece of stream data, whose data volume is less than the specified threshold, the method further includes:
mounting the piece of stream data, whose data volume is less than the specified threshold, to a to-be-aggregated queue;
receiving correlation information sent by an application proxy module, wherein the correlation information is used to signify multiple pieces of stream data with a correlation;
aggregating multiple pieces of stream data, corresponding to the correlation information, in the to-be-aggregated queue, to a piece of virtual stream data, and storing the piece of virtual stream data in the predefined database; and
extracting a feature index of the piece of virtual stream data, and writing the feature index into a memory, and persistently storing the feature index in a hard drive.

14. The method according to claim 13, further comprising:
adding an aggregation instruction to the confirmation message, wherein the aggregation instruction includes a tag for each piece of stream data in the piece of virtual stream data, to allow the encoding device to aggregate each piece of stream data in the piece of virtual stream data and store the aggregated virtual stream data.

15. The method according to claim 13, further comprising:
if a piece of stream data, whose data volume is less than the specified threshold, has an overtime mounting in the to-be-aggregated queue, discarding the piece of stream data with the overtime mounting.

16. The method according to claim 11, after classifying the plurality of data blocks as the at least one piece of stream data based on the stream information, the method further includes:
querying, in the predefined database, a piece of similar stream data whose similarity to a piece of classified stream data reaches a specified similarity threshold;
comparing the piece of classified stream data and the piece of similar stream data, to identify additional new data in the piece of classified stream data; and
when a data volume of the additional new data is less than a specified data volume threshold, adding the additional new data to the piece of similar stream data.

17. A decoding device, comprising a memory and a processor, wherein the memory stores computer programs that, when executed by the processor, implement the following steps:
receiving encoded data transmitted by an encoding device, and decoding the encoded data into decoded data, wherein the decoded data includes a plurality of data blocks;
classifying the plurality of data blocks as at least one piece of stream data based on stream information, and determining a piece of target stream data whose data volume is greater than or equal to a specified threshold; and
storing the piece of target stream data in a predefined database, and sending a confirmation message to the encoding device, wherein the confirmation message includes a tag for a data block in the piece of target stream data, to allow the encoding device to store the data block in the piece of target stream data.

18. The decoding device according to claim 17, wherein the computer programs, when
executed by the processor, further implement the following steps:
when there exists a piece of stream data, in the classified at least one piece of stream data, whose data volume is less than the specified threshold, mounting the piece of stream data whose data volume is less than the specified threshold to a to-be-aggregated queue;
receiving correlation information, wherein the correlation information is used to signify multiple pieces of stream data with a correlation;
aggregating multiple pieces of stream data, corresponding to the correlation information, in the to-be-aggregated queue, to a piece of virtual stream data, and storing the piece of virtual stream data in the predefined database;
extracting a feature index of the piece of virtual stream data, writing the feature index into the memory, and persistently storing the feature index in a hard drive; and
adding an aggregation instruction to the confirmation message, wherein the aggregation instruction includes a tag for each piece of stream data in the piece of virtual stream data, to allow the encoding device to aggregate each piece of stream data in the piece of virtual stream data and store the aggregated virtual stream data.

19. The decoding device according to claim 17, wherein the computer programs, when
executed by the processor, further implement the following steps:
querying, in the predefined database, a piece of similar stream data whose similarity to a piece of classified stream data reaches a specified similarity threshold;
comparing the piece of classified stream data and the piece of similar stream data, to identify additional new data in the piece of classified stream data; and
when a data volume of the additional new data is less than a specified data volume threshold, adding the additional new data to the piece of similar stream data.
